# EUROPÄISCHE PATENTSCHRIFT

(11) **EP 2 427 397 B1**
(45) Veröffentlichungstag und Bekanntmachung des Hinweises auf die Patenterteilung: **26.02.2014**
(21) Anmeldenummer: 10720897.7
(22) Anmeldetag: 06.05.2010
(51) Int. Cl.: B65G 47/51, B65G 47/57, B65G 45/22

(54) **ZWISCHENSPEICHER**
BUFFER STORE
DISPOSITIF DE STOCKAGE INTERMÉDIAIRE

(30) Priorität: 06.05.2009 CH 708092009
(43) Veröffentlichungstag der Anmeldung: 14.03.2012
(73) Patentinhaber: Rotzinger AG, 4303 Kaiseraugst (CH)
(72) Erfinder: PHILIPP, Kurt, 79639 Grenzach-Wyhlen (DE)
(74) Vertreter: Braun, André jr.
(86) Internationale Anmeldenummer: PCT/EP2010/056200
(87) Internationale Veröffentlichungsnummer: WO 2010/128113

(56) Entgegenhaltungen:
- EP-A2- 0 849 198
- CH-A5- 692 453
- DE-A1- 2 206 148
- US-A- 5 111 929
- US-A1- 2004 023 611

## Beschreibung

Die Erfindung betrifft einen Zwischenspeicher gemäss dem Oberbegriff des unabhängigen Patentanspruchs 1 sowie ein entsprechendes Verfahren.

### Beschreibung

Im dem Stand der Technik sind Zwischenspeicher auch als Stückgutspeicher, Ketten- oder Hängespeicher bekannt. So wird in EP 1378467 B1 ein Kettenspeicher vorgeschlagen, bei welchem die Produkte bzw. Gegenstände, zum Beispiel Schokoladetafeln, Gebäckstücke, Dosen oder Bauteile aus dem Maschinenbau, von einer Produktionsvorrichtung zu mindestens einer Verpackungsvorrichtung gefördert werden. Dabei dient der Zwischenspeicher als Ausgleichsvorrichtung zum Ausgleichen von Schwankungen der Zufuhrrate von Produkten aus der Produktion und/oder der Verpackungsrate der Verpackungsvorrichtung. Der Zwischenspeicher dient zudem als Ausgleichsvorrichtung bei vollständigen Betriebsunterbrüchen der Produktionsvorrichtung oder der Verpackungsvorrichtung. Dabei weist der beschriebene Zwischenspeicher mehrere an umlaufenden Ketten aufgehängte Gondeln mit mehreren Tablaren auf, wobei in der Regel jedes Tablar zur Aufnahme einer Reihe von Produkten vorgesehen ist. Jede Kette wird dabei durch mehrere in einem Gestell gelagerte Kettenräder umgelenkt. Der beschriebene Zwischenspeicher weist eine Eingabestation zur Aufnahme der Produkte und eine Ausgabestation zur Abgabe der Produkte auf. Dabei wird die Kette mit den daran verbundenen Gondeln zum Beladen der Gondeln bzw. Tablare an der Eingabestation und zum Entladen der Gondeln bzw. Tablare an der Ausgabestation des Zwischenspeichers vorbeigeführt. Dies erfolgt üblicherweise durch zueinander unabhängig betreibbare Antriebsmotoren zum Antreiben der Ketten. Die Unabhängigkeit wird durch vertikal verschiebbare, also nicht ortsfeste Umlenkräder erreicht, über welche jede Kette geführt ist, wobei pro Kette mindestens ein Umlenkrad an einem Schlitten angeordnet ist. Der beschriebene Zwischenspeicher weist somit einen Transportpfad für mit Produkten beladene Gondeltablare auf, welcher von der Eingabestation zur Ausgabestation führt und sich im Zwischenspeicher obenliegend befindet sowie einen Transportpfad für Gondeln mit leeren Tablaren, welcher von der Ausgabestation hin zur Eingabestation im untenliegenden Bereich des Zwischenspeichers führt.

Einer der Nachteile dieses Zwischenspeichers besteht darin, dass der Kettenabschnitt zwischen Eingabe- und Ausgabestation im oberen Bereich des Zwischenspeichers bzw. der obenliegende Transportpfad mit gefüllten Gondeln in der Praxis üblicherweise mehr Gondeln umfasst, als der untenliegende Transportpfad, in welchem die leeren Gondeln geführt sind. Dies führt dazu, dass viele Produkte im Zwischenspeicher gelagert sein können, wodurch bis zur völligen Entleerung des Speichers wertvolle Produktionszeit aufgewendet werden muss. Die Anforderung, immer höhere Kapazitäten zu verwirklichen und insbesondere die Beladefrequenz des Zwischenspeichers zu erhöhen, kann dazu führen, dass die befüllten schwereren Gondeln im Speicher beim taktweisen Antrieb der Ketten insbesondere im Bereich der Umlenkräder zu schwingen beginnen. Ein weiterer Nachteil besteht darin, dass beim Fördern von beladenen Gondeln im obenliegenden Transportpfad des Zwischenspeichers gerade bei höheren Taktraten Produkte von den Tablaren herunterfallen können und dabei die untenliegenden leeren Tablare der Gondeln, welche sich auf dem untenliegenden Transportpfad befinden, verschmutzen können. Zudem ist beim gezeigten Speicher von Nachteil, dass verschmutze Gondeln jeweils einzeln von Hand gereinigt werden müssen, wobei dazu der Kettenantrieb angehalten werden muss.

US 2004/023611 A1 offenbart ein Verfahren sowie eine entsprechende Vorrichtung zur Herstellung von Lebensmitteln, insbesondere um trockene und gekochte Würste herzustellen. Dabei wird in Darm eingefülltes Fleischprodukt als Rohwurst mittels an Ketten befestigten Aufnahmen eines Förderers von einer Eingangstation durch eine Klimakammer zu einer Ausgangsstation gefördert. Die Ketten laufen jeweils um starr angeordnete Räder in einer vorbestimmten Richtung. Die Aufnahmen sind mit Nocken versehen, welche ein hin- und herschaukeln und somit eine Rollbewegung der Würste bewirken, sobald die Nocken an einen dafür vorgesehenen Anschlag anstossen. Zum Reinigen der Aufnahmen werden diese in einem in der Vorrichtung unten liegenden Abschnitt durch zwei die Aufnahmen ausspülende Stationen geführt. Diese Vorrichtung entspricht dem Oberbegriff des Anspruchs 1.

DE 22 06 148 A1 offenbart einen endlosen Förderer, insbesondere zum Kühlen von Geflügel, bei welchem die Beladung desselben mit Gegenständen mit unterschiedlichen Geschwindigkeiten vorgenommen werden kann, während die Abgabe oder die Verarbeitung bei im Wesentlichen gleichmässigen Geschwindigkeiten durchgeführt werden kann, so dass die Geschwindigkeiten bei der Beladung und Abgabe entkoppelt werden. Zudem weist der Förderer eine Reinigungsstation auf, welcher in einem untenliegenden Förderabschnitt angeordnet ist, um die zur Förderung der Gegenstände vorgesehenen entleerten Tragschienen auf deren Rückweg zu reinigen.

EP 0 849 198 A2 offenbart einen Werkstückzwischenspeicher mit einer Reinigungsstation zur Säuberung der in Wannen gehaltenen Werkstücke auf ihrem Umlaufweg durch den Werkstückzwischenspeicher. In der Reinigungsstation können die Werkstücke abgeblasen, abgebürstet oder mit einer Waschflüssigkeit besprüht werden. Die Speicherstrecke ist durch an starr angeordneten Kettenrädern umlaufenden Ketten gebildet, an welchen die Wannen angeordnet sind.

Der vorliegenden Erfindung liegt deshalb die Aufgabe zu Grunde, eine Vorrichtung zum Zwischenspeichern von Produkten vorzuschlagen, welche die Nachteile des Standes der Technik nicht aufweist. Insbesondere soll ein effizienter, verschleissarmer und kostengünstiger Zwischenspeicher realisiert werden, welcher den hohen Leistungsanforderungen gerecht wird und welcher wartungsarm, unter anderem eine verbesserte Reinigungsmöglichkeit bietend, ausgebildet ist.

Diese Aufgabe wird erfindungsgemäss durch einen Zwischenspeicher gemäss Anspruch 1 sowie einem Verfahren gemäss Anspruch 9 gelöst. Vorteilhafte weiterbildungen des erfindungsgemässen Speichers gehen aus den abhängigen Ansprüchen hervor.

Einer der Vorteile der Erfindung ist, dass die an der Eingabestation mit Produkten beladenen Gondeln auf der Förderstrecke zunächst senkrecht abwärts transportiert und in der Folge in dem im Speicher untenliegenden Förderabschnitt zur Ausgabestation hin transportiert werden, um danach im aufwärtsführenden Streckenabschnitt an der Ausgabestation entladen zu werden, wobei dadurch erreicht wird, dass der Speicher bei Produktionsende schneller entleert werden kann.

Die nach dem "First-in First-out" Prinzip arbeitende Zwischenspeicher hat zudem den Vorteil, dass gegenüber dem Stand der Technik die zuerst beladene Gondel schneller bei der Ausgabestation zur Verfügung steht, so dass die entladenen Produkte schneller der Verpackungsmaschine zugeführt werden können. Zudem sind im erfindungsgemässen Zwischenspeicher die leeren Gondeln nun in dem im Zwischenspeicher obenliegenden Förderabschnitt angeordnet. Somit sind in diesem Abschnitt keine Produkte mehr vorhanden, welche auf die untenliegenden Gondeln herunterfallen und diese verschmutzen könnten.

Ein weiterer Vorteil des Systems besteht darin, dass eine viel kürzere Durchlaufzeit (Kettenlänge) bei der Befüllung vom Einlauf bis zum Auslauf besteht, d.h. das Produkt ist in einer kürzeren Zeit am Auslauf bereit zur Austragung. Es sind immer viel weniger Produkte im Speicher. Im erfindungsgemässen Speicher müssen im untenliegenden Transportpfad nur mindestens 102 Gondeltablare mit Produkten befüllt werden, während in einem vergleichbaren Speicher im Stand der Technik im oberen Transportpfad mindestens 240 Gondeltablare zu befüllen sind. Generell gelangen die Produkte im erfindungsgemässen Speicher in kürzerer Zeit in die Verpackungsstation, wenn der Produktfluss unten durch den Speicher geführt wird. Nach Produktionsende ist der Speicher dadurch auch schneller entleert. Der Zwischenspeicher ist somit als dynamischer Speicher ausgebildet, wobei das Befüllen des Zwischenspeichers vom Entleeren des Zwischenspeichers entkoppelbar ist. Dies erfolgt vorzugsweise mittels einer speicherprogrammierbaren Steuerung (SPS).

Zudem ist es vorteilhaft, dass wenn systematisch nur die Gondeln in den unteren Kettensträngen bzw. im untenliegenden Transportpfad mit Produkten beladen sind, auch keine Produkte mehr auf die leeren Gondeltablare fallen. Es werden dadurch bei der Eingabestation bzw. beim Einlauf oder bei der Ausgabestation bzw. beim Auslauf des Speichers auch keine Folgestörungen mehr verursacht.

Ein anderer Vorteil der Erfindung besteht darin, dass die Reinigungseinrichtung oder Waschmaschine dauerhaft die Förderstrecke des Zwischenspeichers eingebaut ist. Somit können alle Gondeln automatisch und selbständig nach vorgegebenen Kriterien gereinigt werden. Die Waschmaschine weist vorzugsweise eine Vorreinigungseinrichtung, eine Haupt-oder Reinigungseinrichtung und eine Trocknungseinrichtung auf. Vor- und Hauptreinigung weisen jeweils eine Sprühkammer mit Düsen zum Reinigen der Produkteträger mittels eines Fluids auf. Unter Fluid wird eine Flüssigkeit oder ein Gas verstanden, bspw. Wasser, Luft, Öle und Gase. Vorzugsweise werden die Gondeln mit Flüssigkeit und Reinigungsmittel eingesprüht. Nach dieser Vorreinigung werden die Gondeln in einem anderen Abschnitt der Waschanlage im eigentlichen Sinne gereinigt, bspw. indem sie abgespritzt werden. In einem darauf folgenden Abschnitt der Waschanlage werden die Produkteträger oder Gondeln bspw. mit Heissluft getrocknet. Anstelle von Trocknung kann auch ein Abblasen der Tablare der Produkteträger mit Kaltluft vorgesehen sein. Trocknung und/oder Abblasen geschieht im Durchlaufbetrieb mit langsamer Geschwindigkeit. Hierfür ist der Speicher üblicherweise vorab zu entleeren. Eine Reinigung während der Produktion ist grundsätzlich möglich. Da die Förderung der befüllten Gondeln während der Produktionsphase, welche auch als Produktionsbetrieb oder Zwischenspeicherbetrieb bezeichnet wird, in dem im Speicher untenliegenden Förderabschnitt erfolgt, sind im Bereich der Waschmaschine nur leere Gondeln vorhanden, so dass kein Produkt in die Waschzone der Reinigungseinrichtung gelangt. Wenn die Waschmaschine oder Reinigungseinrichtung bei der Ausgabestation nachfolgend angeordnet wird, muss die Transportrichtung bzw. Förderrichtung der Kette diesfalls nicht umgekehrt bzw. reversiert werden, da die Gondeln in der vorgesehenen Richtung durch die Waschmaschine gefördert werden. Die Waschmaschine kann sowohl am Einlauf bzw. bei der Eingabestation, wie auch am Auslauf bzw. bei der Ausgabestation des Speichers über Kopf angeordnet werden. Hierfür wird dann mittels zusätzlichen Umlenkkettenrädern eine Kettenschlaufe aus dem Speicher heraus durch die Waschmaschine gelegt. Damit können die Gondeln in der Kette eingehängt bleiben und müssen nicht ein- und ausgehängt werden. Somit entfallen zwei technisch aufwändige und teure Handhabungsvorgänge. Die komplette Waschmaschine wird auf eine Plattform gestellt, sodass unten im Einlauf- und Auslaufbereich des Speichers nach wie vor die gewohnte Zugänglichkeit gewährleistet ist.

Die erfindungsgemässe Anordnung der Waschmaschine bietet ebenfalls den Vorteil, dass die volle Speicherkapazität des Zwischenspeichers erhalten bleibt, da im Speicher bei der vorgeschlagenen Anordnung auch kein Schlittenhub verloren geht. Der Speicher kann bezüglich einer entsprechenden Speicherkapazität in der gewohnten vertikalen Bauweise konstruiert werden. Wenn die Waschmaschine im Einlaufbereich angeordnet wird, dann wird auch zumeist die Einbaulänge des Speichersystems durch die Waschmaschine nicht wesentlich grösser, da immer auch noch ein notwendiges Beladeband des Speichers vorhanden ist, welches sich auf die Gesamtlänge des Speichersystems auswirkt.

Ein weiterer Vorteil ist darin zu sehen, dass die Tablare der Gondeln am Auslauf des erfindungsgemässen Speichers nicht mehr manuell gereinigt werden müssen. Dabei bestand bis anhin das Problem, dass beim Produktfluss durch den oberen Bereich des Speichers die Gondeln am Auslauf bzw. bei der Ausgabestation von oben nach unten bewegt wurden. Das hatte zur Folge, dass beim Reinigen der Gondeltablare die bereits gereinigten Gondeln nach unten getaktet bzw. gefördert wurden. Jedoch konnten durch die Reinigung der von oberhalb nachfolgenden verschmutzten Gondeln die bereits gereinigten und nach unten geförderten Gondeln wieder mit Schmutz belegt bzw. kontaminiert werden, bspw. durch herunterfallende Partikel oder heruntertropfendes verschmutztes Reinigungsmittel. Diese Problematik stellt sich mit der vorgeschlagenen Vorrichtung nicht mehr, da die Reinigung in der Reinigungsphase in von unten nach oben geführter Förderrichtung erfolgt und somit nur die sauberen Gondeln nach oben bzw. aufwärts gefördert werden.

Erfindungsgemäß kann die Reinigungsvorrichtung auch im abwärtsführenden Streckenabschnitt der Förderstrecke bei der Eingabestation angeordnet werden. Ein Vorteil der Erfindung besteht darin, dass die Fördergondeln mittels entsprechenden Steuerungsmitteln des Zwischenspeichers automatisch und selbständig gereinigt werden können. Dazu muss nach erfolgter Entleerung des Speichers für den Reinigungsprozess die Transportrichtung der mit Gondeln bestückten Kette umgekehrt werden, wenn die Waschmaschine im Einlaufbereich, also bei der Eingabestation des Speichers lokalisiert wird, so dass die verschmutzten Gondeln von unten nach oben durch die Waschmaschine gefahren werden können. Diese erfindungsgemässe Ausbildung des Zwischenspeichers ist insbesondere dann vorteilhaft, wenn bei der Ausgabestation etwa nicht die nötigen Platzverhältnisse zum Anordnen einer Waschmaschine zur Verfügung stehen.

In einer weiteren Ausführungsvariante der Erfindung werden die Produkte zum Zwischenspeichern mittels des Zwischenspeichers auf Produkteträgern gespeichert. Die Produkte träger sind dabei an zwei im Wesentlichen parallel zueinander angeordneten endlosen Fördermitteln, bspw. Ketten, beweglich angeordnet. Dabei werden die Produkte von einer Eingangsstation, bei welcher die Produkteträger mit Produkten beladen werden, zu einer Ausgangsstation gefördert, bei welcher die Produkteträger entladen werden. Bei der Eingangsstation werden die Produkteträger in dieser Ausführungsvariante aufwärts gefördert. Zum Entladen der Produkteträger, werden diese bei der Ausgangsstation abwärts gefördert, derart, dass die beladenen Produkteträger, welche auch als Fördergondeln oder Gondeln bezeichnet werden, demnach im Wesentlichen durch den oberen Bereich des Zwischenspeichers von der Eingangsstation zur Ausgangsstation gefördert werden. Der untere Bereich des Zwischenspeichers weist in dieser Ausführungsvariante die Reinigungseinrichtung auf. Die endlosen Fördermittel, bspw. Ketten, werden durch die Reinigungseinrichtung durchgeschlauft, derart, dass die Produkteträger automatisch sowohl während des Zwischenspeicherbetriebs oder -modus, als auch in einem Reinigungsbetriebs oder -modus, wenn sämtliche Produkteträger entleert sind, gereinigt werden können. Im Zwischenspeichermodus sind sowohl beladene als auch leere Produkteträger im Zwischenspeicher vorhanden.

In einer anderen Ausführungsvariante der Erfindung umfasst der Zwischenspeicher eine Entleereinrichtung zum Entleeren von Produkteträgern, wobei die Entleereinrichtung der Reinigungseinrichtung vorgelagert ist.

Einer der Vorteile der Erfindung dabei ist, dass sichergestellt werden kann, dass alle Tablare der Produkteträger, welche hier auch als Gondeln oder Fördergondeln bezeichnet sind, frei von Produkten, Produktresten, unerwünschten anderen Rückständen usw. sind. Da Produkteträger üblicherweise schwenkbar an den Fördermitteln, bspw. Ketten, aufgehängt sind, kann eine Entleerungseinrichtung durch einen Kippmechanismus gelöst werden, bspw. indem das freie Ende eines Produkteträgers mittels Auslenkmitteln ausgelenkt wird, so dass jedes Tablar in Schräglage gerät und die Produkte abrutschen.

Im Folgenden wird die Erfindung anhand von in den Zeichnungen dargestellten Ausführungsbeispielen näher erläutert. Hierbei gehen aus den Zeichnungen und ihrer Beschreibung weitere wesentliche Merkmale und Vorteile der Erfindung hervor.
Fig. 1 zeigt eine schematische und vereinfachte Darstellung des erfindungsgemässen Stückgutspeichers, welcher zwischen einer Produktionsvorrichtung und einer Verarbeitungsvorrichtung zwischengeschaltet ist, wobei die Verarbeitungsvorrichtung üblicherweise als Verpackungsmaschine ausgebildet ist und wobei eine Reinigungseinrichtung im Transportpfad vor der Eingabestation angeordnet ist;
Fig. 2 zeigt eine schematische und vereinfachte Darstellung des Zwischenspeichers in einer Seitenansicht und
Fig. 3 zeigt eine weitere Ausführungsform der erfindungsgemässen Vorrichtung, wobei Reinigungseinrichtung im aufwärtsführenden Transportpfad der Ausgabestation direkt nachgeordnet ist.

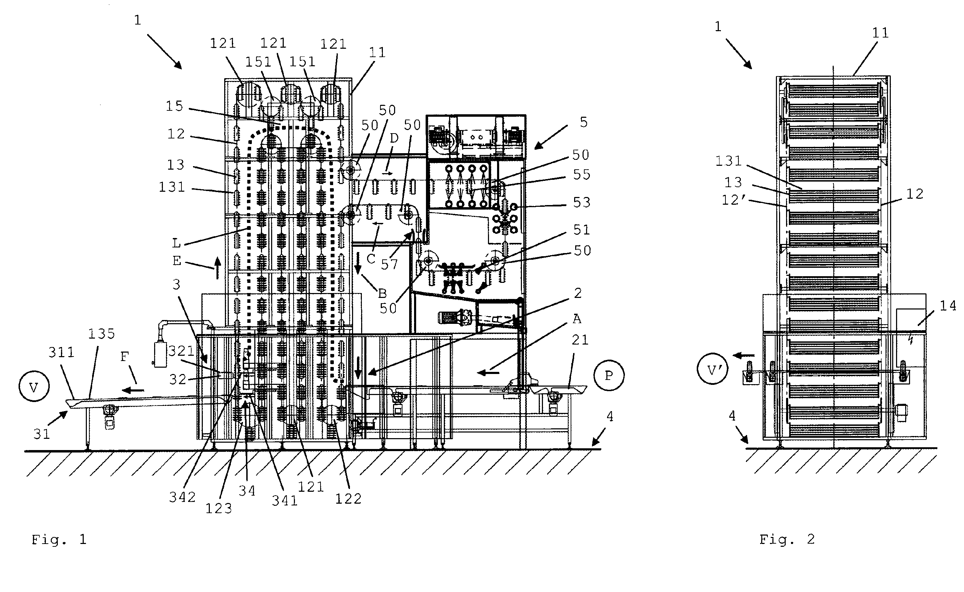

Figur 1 illustriert einen Zwischenspeicher 1 für Produkte 135 mit einer Eingabestation 2 und einer Ausgabestation 3, mit einer zwischen der Eingabe- und Ausgabestation verlaufenden Förderstrecke, wobei mittels Fördergondeln 13 die Produkte 135 zwischen Ein- und Ausgabestation beförderbar sind, wobei die Fördergondeln 13 mittels einem oder mehreren entlang der Förderstrecke umlaufenden Fördermitteln 12,12' verbunden sind, wobei die Eingabestation 2 eine Beschickungseinrichtung 21 zum Beschicken der Fördergondeln 13 mit Produkten 135 umfasst und wobei die Ausgabestation 3 einen bewegbaren Ausschieber 341 zum Ausschieben von Produkten 135 aus den Fördergondeln 13 und eine Aufnahmevorrichtung 31 zur Aufnahme der ausgeschobenen Produkte 135 umfasst. Die Förderstrecke weist bei der Eingabestation 2 einen abwärtsführenden Streckenabschnitt mit einer vertikalen Abwärtsbewegung der Fördergondeln auf, wobei die Beschickungsvorrichtung 31 seitlich am abwärtsführenden Streckenabschnitt angeordnet ist. Die Förderstrecke weist bei der Ausgabestation 3 einen aufwärtsführenden Streckenabschnitt mit einer vertikalen Aufwärtsbewegung der Fördergondeln auf, wobei der Ausschieber 341 und die Aufnahmevorrichtung 31 seitlich gegenüberliegend an dem aufwärtsführenden Streckenabschnitt angeordnet sind. Der Zwischenspeicher 1 umfasst Mittel 122 zum Entkoppeln der Bewegungen der Fördergondeln 13 im abwärtsführenden Streckenabschnitt bei der Eingabestation 2 von den Fördergondeln 13 im aufwärtsführenden Streckenabschnitt bei der Ausgabestation 3. Die Fördermittel 12,12' sind mittels entsprechenden Antrieben vor- und rücklaufend, also reversibel, betreibbar.

Der Zwischenspeicher umfasst im aufwärtsführenden Streckenabschnitt eine der Ausgabestation 3 nachgeordnete Reinigungseinrichtung 5 zum Reinigen der Fördergondeln 13.

Die Aufwärtsbewegung der Fördergondeln 13 kann im aufwärtsführenden Streckenabschnitt kontinuierlich ausführbar sein. Die Aufwärtsbewegung der Fördergondeln 13 im aufwärtsführenden Streckenabschnitt ist auch diskontinuierlich ausführbar. Die Aufnahmevorrichtung 31 kann als Förderer mit einem umlaufenden Förderband 311 zum Aufnehmen der ausgeschobenen Produkte 135 und zur Abgabe der Produkte an mindestens eine Verarbeitungsstation V realisiert werden. Der Förderer ist üblicherweise starr bei der Ausgabestation 3 angeordnet. Die Ausgabestation 3 kann eine Vielzahl von Ausschiebern 341,342 zum Ausschieben der Produkte 135 und eine Vielzahl von entsprechenden Förderern 31,32 zur Aufnahme der Produkte umfassen. Die horizontale Vor- und Rückbewegung jedes Ausschiebers 341,342 ist dabei unabhängig zur horizontalen Vor- und Rückbewegung jedes anderen Ausschiebers realisiert. Die Aufnahmevorrichtung 31 zur Aufnahme der Produkte 135 kann als Platte 311,321 realisiert sein, wobei die Platte zur Abgabe der Produkte an eine Verarbeitungsstation V schwenkbar oder kippbar ausgeführt sein kann. Die Aufnahmevorrichtung 31 kann zur Aufnahme der Produkte 135 Platten und Förderer umfassen. Die Fördermittel 12,12' sind üblicherweise als endlose Ketten und/oder endlose Bänder realisiert. Dabei sind die Ketten bspw. über Kettenräder umlaufend angeordnet. Die Ketten 12,12' sind im Wesentlichen parallel zueinander angeordnet. Es sind mindestens zwei Antriebe für die Ketten vorgesehen, wobei jeder Antrieb eine Welle antreibt, welche entsprechende Kettenräder aufweist. Ein Antrieb fördert die Produkteträger 13 bei der Eingangsstation 2 mittels der Fördermittel 12. Der andere Antrieb fördert die Produkteträger 13 bei der Ausgangsstation 3 mittels der Fördermittel 12. Die Antriebe sind voneinander unabhängig steuerbar. Jeder Antrieb ist mittels einer Steuerung 14 steuerbar und/oder regelbar. Die Synchronisierung der vertikalen Aufwärtsbewegung der Fördergondeln 13 mit der Entladebewegung des Ausschiebers 341 ist im aufwärtsführenden Streckenabschnitt bspw. mittels einer Steuerung 14 realisiert. Die Synchronisierung der vertikalen Abwärtsbewegung der Fördergondeln 13 im abwärtsführenden Streckenabschnitt mit dem Beladetakt der Beschickungseinrichtung 21 ebenfalls mittels der Steuerung 14 realisiert. Die ortsfesten Ketten- bzw. Umlenkräder sind mit Bezugszeichen 121,122,123 bezeichnet. Das Bezugszeichen 122 bezeichnet ein ortsfestes Umlenkrad, welches von einem Antrieb angetrieben ist. Das Umlenkrad 122 ist somit Antriebsrad ausgebildet. Das Bezugszeichen 123 bezeichnet ebenfalls ein ortsfestes Antriebsrad, welches von einem separaten Antrieb getrieben ist. Dadurch ist der Trum des Fördermittels 12 im Bereich der Eingangsstation 2 mittels des Antriebsrads 122 unabhängig vom Trum des Fördermittels 12 im Bereich der Ausgangsstation 3 antreibbar. Das Antriebsrad 123 ist für die Bewegung bzw. Antriebsrichtung und -geschwindigkeit des Fördermittels 12 im Bereich der Ausgangsstation zuständig. Weicht die Fördergeschwindigkeit des Fördermittels 12 bei der Eingangsstation 2 von jener bei der Ausgangsstation 3 ab, so wird diese Differenz durch die Schlitten 15 ausgeglichen. Die am vertikal verschiebbar ausgebildeten Schlitten 15 angeordneten Ketten- bzw. Umlenkräder sind mit dem Bezugszeichen 151 bezeichnet. Mittels der beiden voneinander unabhängigen Antriebe sind der Takt der Beladung der Produkteträger 13 mit Produkten 135 bei der Eingangsstation 2 vom Takt der Entladung der Produkte 135 von Produkteträgern 13 bei der Ausgangsstation 3 voneinander entkoppelt.

Die gestrichelt dargestellte Linie L zeigt die Abgrenzung zwischen im Wesentlichen zwei Bereichen im Speicher, wobei der eine Bereich, eher im Speicher obenliegend angeordnet, die Gondeln mit leeren Tablaren umfasst und wobei der andere Bereich die Gondeln mit den mit Produkten beladenen Tablaren umfasst. Dieser Bereich wird auch als untenliegend im Speicher bezeichnet. Am Schlitten 15 sind vorliegend vier Umlenkräder 151 angeordnet, wobei auf den unteren beiden Umlenkrädern je eine Schlaufe der Kette 12 mit gefüllten Gondeln geführt ist. Um die oberen beiden Umlenkräder 151 sind Gondeln mit leeren Tablaren umlaufend. Die Schlaufen mit gefüllten Gondeln werden auch als ein im Speicher untenliegender Transportpfad bezeichnet. Dieser Abschnitt der Förderstrecke wird als Speicherstrecke bezeichnet. Die Speicherstrecke ist variabel ausgestaltet, da ihre Länge variabel ist, wodurch sich die Anzahl der befüllten Gondeln erhöht oder verringert. Der Zwischenspeicher hat somit eine variable Speicherkapazität. Die Schlaufen und Trume der Kette 12, welche leere Gondeln aufweisen, werden als obenliegender Transportpfad bezeichnet. Die gezeigte Darstellung stellt den Speicher in der sog. Produktionsphase dar. In dieser Phase werden effektiv Produkte zwischengespeichert. Bei der sog. Reinigungsphase sind wie dargelegt die Gondeln im obenliegenden sowie im untenliegenden Transportpfad üblicherweise entleert.

Der Pfeil A zeigt die Förderrichtung der Produkte 135 während der Produktionsphase. Die Pfeile B, C, D und E zeigen die Transport- oder Förderrichtung der Gondeln im Speicher während der Produktionsphase. Der Pfeil F zeigt den Produktionsfluss der dem Speicher entnommenen Produkte 135, wobei die Produkte zur Verpackungsstation V geführt werden.

Die Waschmaschine 5 bzw. Reinigungsstation weist vorzugsweise drei Reinigungsstufen auf, wobei mit Bezugszeichen 51 eine Vorreinigungseinrichtung oder Sprühkammer bezeichnet ist. Mit Bezugszeichen 53 wird eine Reinigungseinrichtung, Abspritzkammer oder Reinigungskammer bezeichnet. Die Waschmaschine umfasst zudem eine mit Bezugszeichen 55 bezeichnete Trocknungseinrichtung oder Heissluftkammer. Dabei werden die Ketten 12,12' durch die Waschmaschine 5 hindurchgeschlauft und über Umlenk- oder Kettenräder 50 umgelenkt. Die Waschmaschine kann auch weniger oder zusätzliche Reinigungsstufen aufweisen. Massgebend sind bei Produkten 135 für den Lebensmittelbereich etwa die Richtlinien und Normen der nordamerikanischen Food and Drug Administration (FDA), die Good Manufacturing Practice (GMP) Regelwerke oder dergleichen mehr. Die Reinigung von Maschinenteilen, vorliegend insbesondere der Gondeln 13 und deren Tablare 131, ist bspw. wichtig bei Nahrungsmitteln, bei welchen gewährleistet werden muss, dass keine Rückstände von Erdnuss oder Nuss an den Gondeln vorhanden sind. Auf diese Weise wird die Herstellung von Produkten 135, bspw. spezielle Nahrungsmittel für Allergiker, durch die vorgeschlagene Erfindung erheblich erleichtert, wobei geforderte Standards eingehalten werden können.

Fig. 2 zeigt eine schematische und vereinfachte Darstellung des Zwischenspeichers 1 in einer Seitenansicht. Bei der Ausgabestation 3 werden die zwischengespeicherten Produkte 135 mittels des Ausschiebers 341 auf die Aufnahmevorrichtung 31 ausgeschoben. Die Aufnahmevorrichtung 31 transportiert die Produkte danach in Richtung der Verpackungsstation V zur weiteren Verarbeitung. Mit Bezugszeichen 14 wird die Steuerung des Zwischenspeichers bezeichnet. Die Steuerung kann zentral in einem Schrank beim Zwischenspeicher angeordnet sein. Mittels der Steuerung werden insbesondere die Antriebe für die Eingabestation 2, die Förderstrecke und die Ausgabestation 3 gesteuert. Antriebe können als Elektromotoren mit und ohne Getriebe realisiert sein. Antriebe können als Linearmotoren realisiert sein. Antriebe können als pneumatische oder hydraulische Schubzylinder realisiert sein. Der Steuerung 14 können auch Signale von Sensormitteln zugeführt werden, um die Steuerung der Antriebe bzw. Antriebsmittel zu optimieren oder an veränderte Betriebsbedingungen, bspw. Temperaturschwankungen oder Verschleiss bei Maschinenteilen, anzupassen.

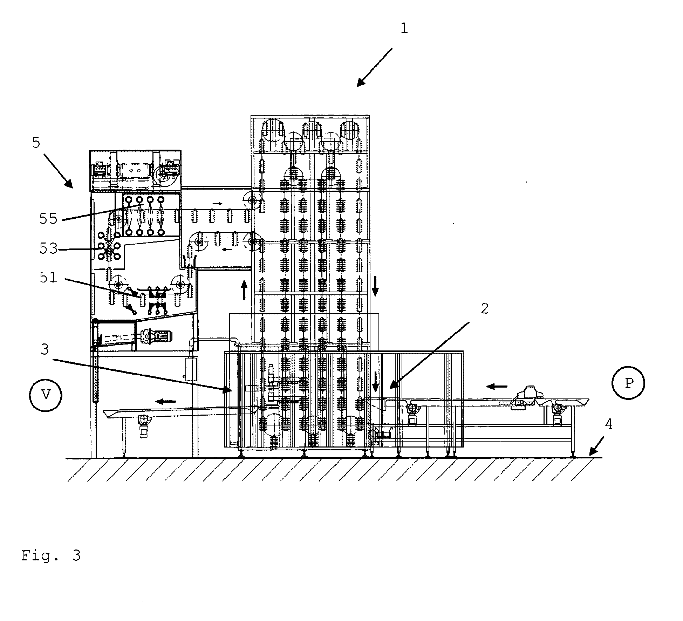

Figur 3 illustriert eine weitere Ausführungsform der erfindungsgemässen Vorrichtung, wobei Reinigungseinrichtung 5 im aufwärtsführenden Transportpfad der Ausgabestation 3 direkt nachgeordnet ist. Die Reinigungseinrichtung oder Waschmaschine ist zum Reinigen der Fördergondeln 13 ausgebildet. Die Förderketten 12,12' werden in einer zusätzlichen Schleife durch die Waschmaschine geführt.

Die Reinigungseinrichtung 5 kann auch als Bad ausgebildet sein, wobei die Produkteträger 13 zu deren Reinigung bei geringer Geschwindigkeit oder bei jeweils kurzzeitigem vorübergehendem Stillstand durch ein Fluidbad gefördert werden, um anschliessend ausserhalb des Bads getrocknet zu werden.

### Bezugszeichenlegende

- 1: Stückgutspeicher, Speicher, Hängespeicher
- 11: Rahmen, Rahmenkonstruktion
- 12: Kette, Förderkette
- 12': Kette, Förderkette
- 121: Kettenrad, Rad
- 122: Antriebsrad, Antrieb, Kettentriebrad
- 123: Antriebsrad, Antrieb, Kettentriebrad
- 13: Fördergondel, Produkteträger, Gondel
- 131: Ablagefläche, Tablar, Platte, Gondeltablar
- 135: Produkt, Stückgut
- 14: Steuerung, Steuereinheit, Regelung, Energieversorgung
- 15: Schlitten
- 151: Kettenrad, Rad

- 2: Eingabestation, Eingangsstation
- 21: Förderer

- 3: Ausgabestation, Ausgangsstation
- 31: Förderer
- 311: Ablagefläche
- 32: Förderer
- 321: Ablagefläche
- 34: Förderer, Aufnahmevorrichtung, Platte
- 341: Ausschieber, Schieber
- 342: Ausschieber, Schieber

- 4: Montageebene, Boden
- 5: Reinigungsstation, Waschmaschine
- 50: Umlenkung, Umlenkrad
- 51: Vorreinigungseinrichtung, Sprühkammer
- 53: Reinigungseinrichtung, Abspritzkammer, Reinigungskammer
- 55: Trocknungseinrichtung, Heissluftkammer
- 57: Entleereinrichtung, Schwenkeinrichtung

- A: Pfeil
- B: Pfeil
- C: Pfeil
- D: Pfeil
- E: Pfeil
- F: Pfeil
- L: Linie
- P: Produktionsstation
- V: Verarbeitungsstation, Verpackungsstation
- V': Verarbeitungsstation, Verpackungsstation

## Patentansprüche

1. Zwischenspeicher (1) zum dynamischen Zwischenspeichern von Produkten (135) zwischen einer Produktionsvorrichtung (P) und einer Verarbeitungsvorrichtung (V), mit einer Eingabestation (2) und einer Ausgabestation (3) des Zwischenspeichers (1) und einer zwischen der Eingabe- und Ausgabestation angeordneten Förderstrecke, wobei die Produkte (135) zwischen Ein- und Ausgabestation mittels Produkteträgern (13) beförderbar sind, wobei die Produkteträger (13) mit entlang der Förderstrecke angeordneten Fördermitteln (12,12') verbunden sind und mit einer in einem Streckenabschnitt der Förderstrecke angeordneten Reinigungseinrichtung (5) zum automatischen Reinigen der Produkteträger (13), **dadurch gekennzeichnet,**
**dass** die Förderstrecke bei der Ausgabestation (3) einen aufwärtsführenden Streckenabschnitt der Förderstrecke mit einer vertikalen Aufwärtsbewegung der Produkteträger (13) aufweist, wobei die Reinigungseinrichtung (5) in diesem aufwärtsführenden Streckenabschnitt angeordnet ist oder
**dass** die Förderstrecke bei der Eingabestation (2) einen abwärtsführenden Streckenabschnitt der Förderstrecke mit einer vertikalen Abwärtsbewegung der Produkteträger (13) aufweist, wobei die Reinigungseinrichtung (5) in diesem abwärtsführenden Streckenabschnitt angeordnet ist,
und **dass** entlang diesem aufwärtsführenden bzw. abwärtsführenden Streckenabschnitt Umlenkräder (50) angeordnet sind, wobei die Fördermittel (12,12') über diese Umlenkräder (50) umgelenkt sind und eine Förderschlaufe bilden, welche durch die Reinigungseinrichtung (5) hindurchgeschlauft ist.

2. Zwischenspeicher (1), gemäss Anspruch 1, **dadurch gekennzeichnet, dass** die Fördermittel (12,12') als Ketten und/oder Bänder ausgebildet sind.

3. Zwischenspeicher (1) gemäss einem der Ansprüche 1 oder 2, **dadurch gekennzeichnet, dass** die Reinigungseinrichtung (5) des Zwischenspeichers (1) eine Sprühkammer (53) zum Reinigen der Produkteträger (13) mittels eines Fluids umfasst.

4. Zwischenspeicher (1) gemäss Anspruch 3, **dadurch gekennzeichnet, dass** die Reinigungseinrichtung (5) des Zwischenspeichers (1) eine Vorreinigungseinrichtung (51) zum Vorreinigen der Produkteträger (13) im Betrieb umfasst, wobei die Vorreinigungseinrichtung (51) der Sprühkammer (53) vorgelagert ist.

5. Zwischenspeicher (1) gemäss einem der Ansprüche 3 oder 4, **dadurch gekennzeichnet, dass** die Reinigungseinrichtung (5) des Zwischenspeichers (1) eine Trocknungseinrichtung (55) zum Trocknen der Produkteträger (13) umfasst, wobei die Trocknungseinrichtung (55) der Sprühkammer (53) nachgelagert ist.

6. Zwischenspeicher (1) gemäss einem der vorgenannten Ansprüche, **dadurch gekennzeichnet, dass** der Zwischenspeicher (1) eine Entleereinrichtung (57) zum Entleeren von Produkteträgern (135) umfasst, wobei die Entleereinrichtung der Reinigungseinrichtung (5) vorgelagert ist.

7. Zwischenspeicher (1) gemäss einem der vorgenannten Ansprüche, **dadurch gekennzeichnet, dass** die Fördermittel (12,12') reversibel antreibbar sind.

8. Zwischenspeicher (1) gemäss einem der vorgenannten Ansprüche, **dadurch gekennzeichnet, dass** die Reinigungseinrichtung (5) Mittel zum Schutz der Fördermittel (12,12') aufweist, um diese von der Reinigung auszuschliessen.

9. Verfahren zum Reinigen von Produkteträgern (13) eines zum Zwischenspeichern von Produkten (135) ausgebildeten Zwischenspeichers (1) gemäss einem der Ansprüche 1 bis 8, wobei die Reinigung die Produkteträger (13) sowohl in einem Zwischenspeicherbetrieb zum Zwischenspeichern von Produkten (135), als auch in einem Reinigungsbetrieb automatisch erfolgen kann.

## Claims

1. Buffer store (1) for the dynamic buffer storage of products (135) between a production device (P) and a processing device (V), having an input station (2) and an output station (3) of the buffer store (1), and a conveying line situated between the input station and the output station, the products (135) being transportable between the input station and the output station by means of product carriers (13), the product carriers (13) being connected to conveying means (12) situated along the conveying line, and the buffer store having a cleaning unit (5), situated in a section of the conveying line, for automatically cleaning the product carriers (13), **characterized in that**
at the output station (3) the conveying line has an upwardly leading section of the conveying line with a vertical upward movement of the product carriers (13), the cleaning unit (5) being situated in this upwardly leading section, or
at the input station (2) the conveying line has a downwardly leading section of the conveying line with a vertical downward movement of the product carriers (13), the cleaning unit (5) being situated in this downwardly leading section, and
deflection wheels (50) are situated along this upwardly leading or downwardly leading section, the conveying means (12, 12') being deflected via these deflection wheels (50) and forming a conveying loop which is looped through the cleaning unit (5).

2. Buffer store (1) according to Claim 1, **characterized in that** the conveying means (12, 12') are designed as chains and/or belts.

3. Buffer store (1) according to one of Claims 1 or 2, **characterized in that** the cleaning unit (5) of the buffer store (1) includes a spray chamber (53) for cleaning the product carriers (13) by means of a fluid.

4. Buffer store (1) according to Claim 3, **characterized in that** the cleaning unit (5) of the buffer store (1) includes a precleaning unit (51) for precleaning the product carriers (13) during operation, the precleaning unit (51) being situated upstream from the spray chamber (53).

5. Buffer store (1) according to one of Claims 3 or 4, **characterized in that** the cleaning unit (5) of the buffer store (1) includes a drying unit (55) for drying the product carriers (13), the drying unit (55) being situated downstream from the spray chamber (53).

6. Buffer store (1) according to one of the preceding claims, **characterized in that** the buffer store (1) includes an emptying unit (57) for emptying product carriers (135), the emptying unit being situated upstream from the cleaning unit (5).

7. Buffer store (1) according to one of the preceding claims, **characterized in that** the conveying means (12, 12') are reversibly drivable.

8. Buffer store (1) according to one of the preceding claims, **characterized in that** the cleaning unit (5) has means for protecting the conveying means (12, 12') in order to exclude them from the cleaning.

9. Method for cleaning product carriers (13) of a buffer store (1) designed for the buffer storage of products (135) according to one of Claims 1 through 8, wherein the cleaning of the product carriers (13) may take place automatically in a buffer storage mode for the buffer storage of products (135), as well as in a cleaning mode.

## Revendications

1. Accumulateur intermédiaire (1) destiné à l'accumulation intermédiaire dynamique de produits (135) entre un dispositif de production (P) et un dispositif de traitement (V), comportant une station de chargement (2) et une station de déchargement (3) de l'accumulateur intermédiaire (1) et une voie de transport disposée entre la station de chargement et la station de déchargement, les produits (135) pouvant être transportés entre la station de chargement et la station de déchargement au moyen de supports de produits (13), les supports de produits (13) étant reliés à des moyens de transport (12, 12') disposés le long de la voie de transport, et comportant un dispositif de nettoyage (5) destiné au nettoyage automatique des supports de produits (13), disposé dans un segment de la voie de transport, **caractérisé par le fait**
**que** la voie de transport présente, à la station de déchargement (3), un segment de voie ascendant de la voie de transport qui comporte un mouvement d'élévation vertical des supports de produits (13), le dispositif de nettoyage (5) étant disposé dans ce segment de voie ascendant ou
**que** la voie de transport présente, à la station de chargement (2), un segment de voie descendant de la voie de transport qui comporte un mouvement de descente vertical des supports de produits (13), le dispositif de nettoyage (5) étant disposé dans ce segment de voie descendant,
et **que** des roues de renvoi (50) sont disposées sur la longueur de ce segment de voie ascendant ou descendant, les moyens de transport (12, 12') étant renvoyés sur ces roues de renvoi (50) et formant une boucle de transport qui passe à travers le dispositif de nettoyage (5).

2. Accumulateur intermédiaire (1) selon la revendication 1, **caractérisé par le fait que** les moyens de transport (12, 12') sont constitués par des chaînes et/ou des bandes.

3. Accumulateur intermédiaire (1) selon l'une des revendications 1 ou 2, **caractérisé par le fait que** le dispositif de nettoyage (5) de l'accumulateur intermédiaire (1) comprend une chambre de pulvérisation (53) destinée à nettoyer les supports de produits (13) au moyen d'un fluide.

4. Accumulateur intermédiaire (1) selon la revendication 3, **caractérisé par le fait que** le dispositif de nettoyage (5) de l'accumulateur intermédiaire (1) comprend un dispositif de nettoyage préalable (51) destiné au nettoyage préalable des supports de produits (13) pendant le fonctionnement, le dispositif de nettoyage préalable (51) étant placé en amont de la chambre de pulvérisation (53).

5. Accumulateur intermédiaire (1) selon l'une des revendications 3 ou 4, **caractérisé par le fait que** le dispositif de nettoyage (5) de l'accumulateur intermédiaire (1) comprend un dispositif de séchage (55) destiné au séchage des supports de produits (13), le dispositif de séchage (55) étant placée en aval de la chambre de pulvérisation (53).

6. Accumulateur intermédiaire (1) selon l'une des revendications précitées, **caractérisé par le fait que** l'accumulateur intermédiaire (1) comprend un dispositif de vidage (57) destiné à vider les supports de produits (135), le dispositif de vidage étant placé en amont du dispositif de nettoyage (5).

7. Accumulateur intermédiaire (1) selon l'une des revendications précitées, **caractérisé par le fait que** les moyens de transport (12, 12') sont aptes à être entraînés de façon réversible.

8. Accumulateur intermédiaire (1) selon l'une des revendications précitées, **caractérisé par le fait que** le dispositif de nettoyage (5) comprend des moyens destinés à protéger les moyens de transport (12, 12') pour les exclure du nettoyage.

9. Procédé pour nettoyer des supports de produits (13) d'un accumulateur intermédiaire (1) conçu pour l'accumulation intermédiaire de produits (135) selon l'une des revendications 1 à 8, dans lequel le nettoyage des supports de produits (13) peut s'effectuer aussi bien dans une opération de l'accumulateur intermédiaire pour l'accumulation intermédiaire de produits (135) qu'automatiquement dans une opération de nettoyage.
